# EUROPEAN PATENT APPLICATION

(11) **EP 4 563 716 A1**
(43) Date of publication of application: **04.06.2025**
(21) Application number: 23845734.5
(22) Date of filing: 31.07.2023
(51) Int. Cl.: C22C 38/32, C22C 38/14, C21D 8/00, C21D 8/02, C21D 1/18

(54) **STEEL PLATE FOR BOX OF LARGE MINING DUMP TRUCK IN EXTREMELY COLD ZONE AND MANUFACTURING METHOD THEREFOR**

(30) Priority: 29.07.2022 CN 202210914190
(71) Applicant: BAOSHAN IRON & STEEL CO., LTD., Shanghai 201900 (CN)
(72) Inventor: LI, Hongbin, Shanghai 201900 (CN); DING, Jianhua, Shanghai 201900 (CN); JIAO, Sihai, Shanghai 201900 (CN)
(74) Representative: Kuhnen & Wacker Patent- und Rechtsanwaltsbüro PartG mbB
(86) International application number: PCT/CN2023/110173
(87) International publication number: WO 2024/022530

(57) **Abstract**

A steel plate for a box of a large mining dump truck in an extremely cold zone and a manufacturing method therefor. The steel plate is divided into a composite-layer steel plate and a base-layer steel plate. The composite-layer steel plate and the base-layer steel plate are metallurgically bonded. The composite-layer steel plate comprises the following chemical components: 0.19-0.29 wt.% of C; 0.15-0.75 wt.% of Si; 0.55-1.55 wt.% of Mn; 0.10-0.70 wt.% of Cr; less than or equal to 0.030 wt.% of P; less than or equal to 0.010 wt.% of S; 0.010-0.060 wt.% of Al; 0.0005-0.0050 wt.% of B; any one or more selected from 0.01-0.60 wt.% of Mo, 0.01-0.08 wt.% of RE, 0.005-0.060 wt.% of Nb, 0.01-0.10 wt.% of V, and 0.005-0.060 wt.% of Ti; and the balance of Fe and inevitable impurities. The base-layer steel plate comprises the following chemical components: 0.08-0.13 wt.% of C; 0.15-0.55 wt.% of Si; 0.70-1.70 wt.% of Mn; 0.05-0.55 wt.% of Cr; 0.10-0.55 wt.% of Mo; 1.25-2.55 wt.% of Ni; less than or equal to 0.030 wt.% of P; less than or equal to 0.010 wt.% of S; 0.010-0.080 wt.% of Al; 0.0005-0.0050 wt.% of B; any one or more selected from 0.01-0.08 wt.% of RE, 0.005-0.060 wt.% of Nb, 0.01-0.10 wt.% of V, and 0.005-0.060 wt.% of Ti; and the balance of Fe and inevitable impurities. By means of the design of the steel element components, the composite-layer steel plate has relatively high strength and hardness, and the base-layer steel plate has excellent low-temperature toughness while having relatively high strength and hardness. According to the steel plate compounded by a rolling process, the steel plates of the layers are metallurgically bonded, so that the integrity of the steel plate can be ensured, and the characteristics of the steel plates of the layers can be exerted, and thus, the whole composite plate has excellent comprehensive mechanical properties. In addition, the contents of carbon and alloy elements are controlled, thereby reducing the carbon equivalent, thus ensuring that the steel plate has good welding performance.

## Description

### Technical Field

The present disclosure relates to a steel plate and a manufacturing method thereof, in particular a steel plate for the box body of a large mining dump truck in an extremely cold zone and a manufacturing method thereof.

### Background Art

Wear-resistant steel plates are usually used in mechanical equipment for engineering, mining, cement production, ports, electric power and metallurgy, such as scraper conveyors and dump truck box bodies, that require high wear resistance, high strength, high hardness and high toughness under particularly harsh working conditions.

Particularly, due to the low temperature of the working environment, the large mining dump trucks serving in extremely cold zones have high requirements for the comprehensive performance of the vehicle box material, especially the low temperature performance. Compared with ordinary high-strength steel, the low-alloy high-strength wear-resistant steel plate for the box body of a dump truck has higher strength, but poorer low-temperature toughness, and at the extremely cold ambient temperature not higher than -40 °C or even -60 °C, the box steel plate, especially the bottom plate, is often susceptible to ore impact and fragmentation. In addition, due to the large size and specification of the wear-resistant steel plate for the box body, it is not easy to preheat the welding, so the steel plate is required to have good welding performance. The steel plate with high wear resistance, high strength, high hardness, high toughness and welding performance that can meet the requirements of the box body of a large mining dump truck in extremely cold zones at the same time needs to be further studied.

### Summary

The object of the present disclosure is to solve the above-mentioned problem, i.e. to provide a steel plate for the box body of a large mining dump truck in an extremely cold zone and a manufacturing method thereof. For the purposes of this context, the extremely cold ambient temperature is defined as a temperature not higher than -40°C. The extremely cold zone is defined as the zone where the ambient temperature is not higher than -40°C.

In order to achieve the purpose of the present disclosure, the present disclosure provides a steel plate for the box body of a large mining dump truck in an extremely cold zone. The steel plate is divided into two layers, a clad-layer steel plate and a base-layer steel plate, and the two layers are metallurgically bonded. Specifically, the chemical composition of the clad-layer steel plate is: C: 0.19-0.29wt.%; Si: 0.15-0.75wt.%; Mn: 0.55-1.55wt.%; Cr: 0.10-0.70wt.%; P: ≤0.030wt.%; S: ≤0.010wt.%; Al: 0.01 0-0.060wt. %; B: 0.0005-0.0050wt.%; and one or more of Mo: 0.01-0.60 wt.%, RE: 0.01-0.08 wt.%, Nb: 0.005-0.060 wt.%, V: 0.01-0.10 wt.%, and Ti: 0.005-0.060 wt.%, with a balance of Fe and unavoidable impurities.

The chemical composition of the base-layer steel plate is: C: 0.08-0.13wt.%; Si: 0.15-0.55wt.%; Mn: 0.70-1.70wt.%; Cr: 0.05-0.55wt.%; Mo: 0.10-0.55wt.%; Ni: 1.25-2.55wt.%; P: ≤0.030wt.%; S: ≤0.010wt.%; Al: 0.010-0.080wt.%; B: 0.0005-0.0050wt.%; and one or more of RE: 0.01-0.08wt.%, Nb: 0.005-0.060wt.%, V: 0.01-0.10wt.%, and Ti: 0.005-0.060wt.%, with a balance of Fe and unavoidable impurities.

Therefore, through the design of the above-mentioned steel element composition, the clad-layer steel plate has a high strength-hardness, and the base-layer steel plate has a high strength-hardness and excellent low-temperature toughness at the same time. For the steel plate combined by a rolling process, each layer of the steel plate is bonded metallurgically, which can not only ensure the integrity of the steel plate, but also give full play to the characteristics of each layer of steel plate, so that the composite plate as a whole has excellent comprehensive mechanical properties. In addition, by controlling the content of carbon and alloying elements, the carbon equivalent is reduced, so as to ensure that the steel plate has excellent welding performance.

Specifically, the composition design principle of the steel plate for the box body of a large mining dump truck in an extremely cold zone described in the present disclosure is as follows:
Carbon: carbon is the most basic and important element in wear-resistant steel, which improves the strength and hardness of steel through solution strengthening and precipitation strengthening, and carbon is also an important element to ensure that a martensitic structure is obtained. If the carbon content is too low, it is not guaranteed that the steel will obtain bainitic or martensitic structure and the required mechanical properties and wear resistance; if the carbon content is too high, it will increase the segregation tendency of the steel in the process of continuous casting or die casting, resulting in serious segregation of the steel plate, reducing the toughness of the steel plate, and obtaining unqualified mechanical property index. In the clad-layer steel plate of the present disclosure, the carbon content is controlled to be 0.19-0.29wt.%, preferably 0.20-0.29wt.%, to ensure the strength and hardness of the steel plate; the carbon content in the base-layer steel plate is controlled to be 0.08-0.13wt.%, and preferably 0.08-0.12wt.%, with the toughness taken into account while ensuring the strength and hardness of the steel plate. In some embodiments, in the clad-layer steel plate of the present disclosure, the carbon content is controlled to be 0.20-0.28wt.%.
Silicon: appropriate silicon is a beneficial deoxidizer in steel, which can form calcium-aluminosilicate inclusions that are easy to float together with calcium and aluminum in steel, and improve the purity of steel. Silicon solid solutions increase the hardness and strength of ferrite and austenite. However, too much silicon can cause a sharp decrease in the toughness of steel. Therefore, the Si content in the clad-layer steel plate of the present disclosure is controlled to be 0.15-0.75wt.%, preferably 0.20-0.75wt.%; The Si content in the base-layer steel plate is controlled to be 0.05-0.55wt.%, and preferably 0.10-0.50wt.%. In some embodiments, the Si content in the clad-layer steel plate of the present disclosure is controlled to be 0.15-0.35wt.%. In some embodiments, the Si content in the base-layer steel plate of the present disclosure is controlled to be 0.20-0.45wt.%.
Manganese: manganese increases the hardenability of the steel strongly and reduces the steel transition temperature and the critical cooling rate of the steel. However, when the content of manganese is high, it has a tendency to roughen the grains, increases the tempering brittleness sensitivity of the steel, and it is easy to cause segregation and cracks in the casting billet, which reduces the performance of the steel plate. Therefore, the Mn content in the clad-layer steel plate of the present disclosure is controlled to be 0.55-1.55wt.%, preferably 0.60-1.50wt.%; the Mn content in the base-layer steel plate is controlled to be 0.70-1.70wt.%, and preferably 0.70-1.60wt.%. In some embodiments, the Mn content in the clad-layer steel plate of the present disclosure is controlled to be 0.65-1.00wt.%. In some embodiments, the Mn content in the base-layer steel plate of the present disclosure is controlled to be 0.90-1.55wt.%.
Chromium: chromium can improve the hardenability of steel and increase the strength and hardness of steel. Chromium can prevent or slow down the precipitation and aggregation of carbides during tempering, which can improve the tempering stability of steel. Chromium can significantly improve corrosion resistance. Therefore, the Cr content in the clad-layer steel plate of the present disclosure is controlled to be 0.05-0.55wt.%, preferably 0.10-0.55wt.%; the Cr content in the base-layer steel plate is controlled to be 0.15-0.55wt.%, and preferably 0.15-0.50wt.%. In some embodiments, the Cr content in the clad-layer steel plate of the present disclosure is controlled to be 0.20-0.35wt.%. In some embodiments, the Cr content in the base-layer steel plate of the present disclosure is controlled to be 0.15-0.25wt.%.
Aluminum: aluminum and nitrogen in steel can form fine, insoluble AIN particles, which refine the grains of steel. Aluminum can refine the grain of steel, fix nitrogen and oxygen in steel, reduce the notch sensitivity of steel, reduce or eliminate the aging phenomenon of steel, and improve the toughness of steel. Therefore, the Al content in the clad-layer steel plate of the present disclosure is controlled to be 0.010-0.060wt.%, preferably 0.015-0060wt.%; the Al content in the base-layer steel plate is controlled to be 0.010-0.080wt.%, and preferably 0.010-0.070wt.%. In some embodiments, the Al content in the clad-layer steel plate of the present disclosure is controlled to be 0.030-0.055wt.%. In some embodiments, the Al content in the base-layer steel plate of the present disclosure is controlled to be 0.035-0.050wt.%.
Boron: the addition of a trace amount of boron to the steel can greatly improve the quenching hardenability, but when the boron content is too high, it is easy to be enriched at the grain boundary, reducing the grain boundary bonding energy, making the steel plate more inclined to fracture along the grain boundary when it is subjected to impact load, and reducing the low-temperature impact absorption work of the steel plate. Therefore, the B content in the clad-layer steel plate of the present disclosure is controlled to be B: 0.0005-0.0050wt.%, preferably 0.0010-0.0050wt.%; the B content in the base-layer steel plate of the present disclosure is controlled to be B: 0.0005-0.0050wt.%, preferably 0.0005-0.0040wt.%. In some embodiments, the B content in the clad-layer steel plate of the present disclosure is controlled to be B: 0.0015-0.0025wt.%. In some embodiments, the B content in the base-layer steel plate of the present disclosure is controlled to be B: 0.0010-0.0025wt.%.
Among other elements, molybdenum: molybdenum can refine grains and improve strength and toughness. Molybdenum is an element that reduces tempering brittleness and can improve tempering stability. RE: RE stands for rare earth elements, specifically selected from one or more of La, Ce and Nd. The addition of rare earth element to steel can reduce the segregation of sulfur, phosphorus and other elements, improve the shape, size and distribution of non-metallic inclusions, and at the same time can refine grains, strengthen grain boundaries, and improve strength-hardness and toughness. Nickel: Nickel has the effect of significantly reducing the cold brittleness transition temperature, however, if the content is too high, it will tend to cause the oxide scale on the surface of the steel plate to be difficult to fall off, and the cost will increase significantly. Niobium: Niobium improves the strength and toughness of steel through grain refinement. Titanium: Titanium is one of the strong carbide-forming elements, forming fine TiC particles with carbon. The TiC particles are fine and distributed in the grain boundaries to achieve the effect of refining the grains, and the harder TiC particles improve the wear resistance of the steel. Therefore, the clad-layer steel plate of the present disclosure comprises one or more of Mo: 0.01-0.60wt.%; RE: 0.01-0.08wt.%; Nb: 0.005-0.060wt.%; V: 0.01-0.10wt.%; Ti: 0.005-0.060wt.%. The base-layer steel plate comprises one or more of Re: 0.01-0.08wt.%; Nb: 0.005-0.060wt.%; V: 0.01-0.10wt.%; Ti: 0.005-0.060wt.%.

In some embodiments, in the clad-layer steel plate of the present disclosure, the content of Mo is ≤ 0.20wt.%, such as 0.10-0.20wt.%. In some embodiments, in the clad-layer steel plate of the present disclosure, the content of RE is ≤ 0.05wt.%, or the clad-layer steel plate of the present disclosure does not comprise RE. In some embodiments, in the clad-layer steel plate of the present disclosure, the content of Nb is ≤ 0.030wt.%, such as 0.010-0.030wt.%. In some embodiments, in the clad-layer steel plate of the present disclosure, the content of V is ≤0.06wt.%. In some embodiments, in the clad-layer steel plate of the present disclosure, the content of Ti is ≤ 0.030wt.%, such as 0.010-0.030wt.%.

In some embodiments, the clad-layer steel plate of the present disclosure comprises: Mo: ≤0.20wt.%; RE: ≤0.05wt.%; Nb: 0.010-0.030wt.%; V≤0.06wt.%; and Ti: 0.010-0.030wt.%.

In some embodiments, in the base-layer steel plate of the present disclosure, the content of RE is ≤ 0.06wt.%, such as 0.02-0.06wt.%. In some embodiments, in the base-layer steel plate of the present disclosure, the content of Nb is ≤ 0.06wt.%, such as 0.010-0.030wt.%. In some embodiments, in the base-layer steel plate of the present disclosure, the content of V is ≤ 0.08wt.%, such as 0.04-0.08wt.%. In some embodiments, in the base-layer steel plate of the present disclosure, the content of Ti is ≤ 0.04wt.%, such as 0.01-0.035wt.%.

In some embodiments, the base-layer steel plate of the present disclosure comprises: RE: ≤0.06wt.%; Nb: 0.010-0.030wt.%; V: ≤0.08wt.%; and Ti: 0.01-0.035wt.%.

In some embodiments, the carbon equivalent Ceq of the clad-layer steel plate of the present disclosure is 0.40~0.50; the carbon equivalent Ceq of the base layer is 0.45~0.60; wherein, the carbon equivalent Ceq = C + Mn/6 + (Cr + Mo + V)/5 + (Cu + Ni)/15.

Phosphorus and sulfur: in wear-resistant steel, sulfur and phosphorus are both harmful elements, and their content should be strictly controlled, and the phosphorus content in the steel grade involved in the present disclosure should be controlled to be ≤0.030wt.%; and the sulfur content should be controlled to be ≤0.010wt.%.

In one embodiment of the present disclosure, the steel plate for the box body of a large mining dump truck in an extremely cold zone involved in the present disclosure is consisting of the above-mentioned elements, Fe and unavoidable impurities. In another embodiment of the present disclosure, the steel plate for the box body of a large mining dump truck in an extremely cold zone involved in the present disclosure comprises the above-mentioned elements, Fe and unavoidable impurities.

Preferably, the steel plate for the box body of a large mining dump truck in an extremely cold zone involved in the present disclosure is a composite steel plate, and the typical mechanical properties are as follows: the typical mechanical properties of the clad-layer steel plate are as follows: a Brinell hardness of not less than 450HBW (such as 450~540HBW), an impact energy at -60 °C of not less than 10J, preferably not less than 15J, and more preferably not less than 20J (such as 10~35J); the typical mechanical properties of the base-layer steel plate are as follows: a Brinell hardness of not less than 300HBW (such as 300~410HBW or 330~410HBW), an impact energy at -60°C of not less than 100J, preferably of not less than 115J, preferably of not less than 120J (such as 100~140J). The microstructure of the clad-layer steel plate in the steel plate for the box body of the large mining dump truck in an extremely cold zone is martensite and a small amount of residual austenite, and the microstructure of the base-layer steel plate part is martensite or bainite and residual austenite.

In the steel plate for the box body of a large mining dump truck in an extremely cold zone involved in the present disclosure, the metallurgical bond between the clad-layer steel plate and the base-layer steel plate refers to the bond formed by the mutual diffusion of atoms between the interface of the base layer and the clad layer, which can be realized by the usual metallurgical bonding means, such as the explosive cladding process, the roll bonding process, and the roll bonding process is preferred.

In the steel plate for the box body of a large mining dump truck in an extremely cold zone involved in the present disclosure, the ratio of the thickness of the base layer to the thickness of the clad layer is determined according to the product performance needs. In one embodiment, the thickness of the clad-layer steel plate is 5~20mm, more preferably 6~18mm and the thickness of the base-layer steel plate is 6~15mm, and more preferably 8~14mm.

The steel plate for the box body of a large mining dump truck in an extremely cold zone with excellent strength hardness, toughness, welding performance, and mechanical processing performance involved in the present disclosure is obtained by controlling the chemical composition of the clad-layer steel plate and the base-layer steel plate, the rolling bonding process and the heat treatment process, and is suitable for the products such as the steel plate for the box body of a large mining dump truck in the extremely cold zone.

The manufacturing method of the steel plate for the box body of a large mining dump truck in an extremely cold zone described in the present disclosure comprises the following steps:
(1) smelting and casting to form a clad-layer continuous casting billet and a base-layer continuous casting billet;
(2) making the clad-layer continuous casting billet and the base-layer continuous casting billet into a composite billet assembly;
(3) slab heating and slab rolling of the composite billet assembly: in the heating step, the slab heating temperature is 1100-1250 °C, and the slab is held for 1-3 hours. The combined continuous casting slab is rolled, in which the start rolling temperature is 1000~1150 °C, the final rolling temperature is 880~980 °C, and the reduction rate of finish rolling is ≥50% (such as 55~85%). After rolling, the steel plate is quenched online to a temperature between room temperature and 200°C (such as 100~200 °C), and tempering treatment can be carried out according to needs; the tempering temperature is 150~350 °C (such as 150~280 °C), the holding time is (3× plate thickness) min, and the unit of plate thickness is mm. The thickness of the plate is the thickness of the rolled steel plate.

Preferably, the process of making a clad-layer continuous casting billet and a base-layer continuous casting billet into a composite billet assembly comprises the following steps:
(i) using a mechanical method to clean the surface oxide layer on the one side to be laminated of the clad-layer continuous casting billet and the base-layer continuous casting billet, and then grooving the four edges of the surface after the surface oxide layer is cleaned;
(ii) placing and laminating the surface cleaned clad-layer continuous casting billet and the base-layer continuous casting billet in a manner that the cleaned surface of the clad-layer continuous casting billet faces the cleaned surface of the base-layer continuous casting billet;
(iii) welding and sealing the laminated surface of the clad-layer continuous casting billet and the base-layer continuous casting billet around the perimeter and leaving a vacuum channel at the edge, through which the composite billet assembly after welding and sealing is vacuumed, and then sealing the composite billet assembly to form a composite billet assembly.

In the manufacturing method of the steel plate for a large mining dump truck box body in an extremely cold zone involved in the present disclosure, the thickness specification ratio of the base-layer continuous casting billet and the clad-layer continuous casting billet is determined according to the product performance needs.

Compared with the prior art, the steel plate for the box body of a large mining dump truck in an extremely cold zone of the present disclosure has the following beneficial effects:
1. From the point of view of chemical composition, the chemical composition of the clad-layer steel plate of the steel plate of the present disclosure is mainly medium or high-carbon and low-alloy, and the strong hardening effect of C and a small amount of alloying elements are fully utilized, and the welding performance of the steel plate is improved as much as possible while improving the strength hardness of the steel plate; the chemical composition of the base-layer steel plate is mainly low-carbon and low-alloy, and by adding an appropriate amount of alloying elements such as Mo, Ni, Nb, V, Ti and other alloying elements, the easy weldability of the steel plate is improved as much as possible while improving the impact toughness of the steel plate. Through the ratio of different chemical compositions of the base-layer steel plate and the clad-layer steel plate, the steel plate of the present disclosure has the characteristics of excellent strength and toughness, easy weldability, easy machinability and wear resistance, etc.
2. From the point of view of production process, two continuous casting billets are used for composite assembly. By controlling the process parameters such as heating temperature, start and final rolling temperature, deformation rate of rolling, on-line quenching temperature, tempering temperature, etc., the microstructure refinement and strengthening effect can be improved, and the content of carbon and alloying elements can be reduced, and the steel plate with excellent mechanical properties and wear resistance is obtained. At the same time, the metallurgical bond and synergy of the base-layer steel plate and the clad-layer steel plate ensure the performance of the steel plate products.
3. From the point of view of product performance, the steel plate for the box body of a large mining dump truck in an extremely cold zone of the present disclosure has excellent strength and toughness: the typical mechanical property of the clad-layer steel plate is as follows: an impact energy at -60 °C of not less than 10J, preferably not less than 15J, and more preferably not less than 20J; the typical mechanical properties of the base-layer steel plate are as follows: a Brinell hardness of not less than 300HB, an impact energy at -60°C of not less than 100J, preferably of not less than 115J, preferably of not less than 120J. In the steel plate for the box body of a large mining dump truck in an extremely cold zone formed by metallurgical bond of the above-mentioned clad layer and base layer, the toughness of the base layer can be transmitted to the steel plate as a whole through metallurgical bond, so as to ensure that the steel plate as a whole is not easy to break, and the high hardness of the clad-layer steel plate is reduced to avoid the damage caused by minerals.
4. From the point of view of microstructure, the microstructure of the clad-layer steel plate part in the steel plate for the box body of a large mining dump truck in an extremely cold zone of the present disclosure is martensite and a small amount of residual austenite, and the microstructure of the base-layer steel plate is martensite or bainite and residual austenite.

In a word, the steel plate for the box body of a large mining dump truck in an extremely cold zone with excellent strength hardness, toughness, welding performance, and machining performance involved in the present disclosure is obtained by controlling the chemical composition of the clad-layer steel plate and the base-layer steel plate, the rolling bonding process and the heat treatment process, and is suitable for the products such as the steel plate for the box body of a large mining dump truck in an extremely cold zone.

### Examples

The weight percentage of chemical elements of the steel plate for the box body of a large mining dump truck in an extremely cold zone of the following Example 1-5 and Comparative Example 1 is shown in Table 1; the manufacturing method of the steel plate for the box body of a large mining dump truck in an extremely cold zone of Example 1-5 and the steel plate of Comparative Example 1 was as follows: the corresponding smelting raw materials were subjected to the following steps: smelting→ casting→ compositing → heating→ rolling→ online quenching → tempering. The mass percentages of chemical elements of the steel plate in each example was controlled, wherein, in the heating step, the slab was heated at a temperature of 1050-1250 °C and held for 1-3 hours. The combined continuous casting slab was subjected to composite rolling, in which the start rolling temperature was 950~1150 °C, the final rolling temperature was 880~980 °C, the reduction rate was ≥50%, the steel plate was online quenched and water cooled to a temperature between room temperature and 200 °C, the tempering temperature was 150~350 °C, and the holding time (min) was 3* plate thickness. The specific process parameters of Example 1-5 and Comparative Example 1 are shown in Table 2.

**Table 1: chemical composition of Example 1-5 and Comparative Example 1 (wt.%)**

| | Example 1 | | Example 2 | | Example 3 | | Example 4 | | Example 5 | | Comparative Example 1 |
|---|---|---|---|---|---|---|---|---|---|---|---|
| | clad-layer steel plate | base layer steel plate | clad-layer steel plate | base-layer steel plate | clad-layer steel plate | base-layer steel plate | clad-layer steel plate | base-layer steel plate | clad-layer steel plate | base-layer steel plate | Single layer |
| C | 0.2 | 0.08 | 0.22 | 0.09 | 0.24 | 0.1 | 0.26 | 0.11 | 0.28 | 0.12 | 0.35 |
| Si | 0.25 | 0.45 | 0.15 | 0.35 | 0.3 | 0.2 | 0.35 | 0.25 | 0.25 | 0.35 | 0.23 |
| Mn | 1 | 1.55 | 0.95 | 1.45 | 0.65 | 1.2 | 0.75 | 1.35 | 0.85 | 0.9 | 1.36 |
| P | 0.008 | 0.007 | 0.007 | 0.008 | 0.007 | 0.007 | 0.009 | 0.008 | 0.008 | 0.007 | 0.013 |
| S | 0.002 | 0.003 | 0.003 | 0.002 | 0.003 | 0.002 | 0.002 | 0.003 | 0.003 | 0.002 | 0.008 |
| Cr | 0.28 | 0.17 | 0.2 | 0.23 | 0.27 | 0.2 | 0.35 | 0.25 | 0.25 | 0.25 | 0.56 |
| Mo | - | 0.25 | - | 0.2 | 0.15 | 0.27 | - | 0.31 | 0.1 | 0.25 | 0.21 |
| Ni | - | 1.55 | - | 1.75 | - | 2.05 | - | 1.65 | - | 1.55 | - |
| Al | 0.03 | 0.035 | 0.045 | 0.05 | 0.035 | 0.04 | 0.045 | 0.05 | 0.055 | 0.05 | 0.05 |
| B | 0.002 | 0.0012 | 0.0016 | 0.0015 | 0.0025 | 0.0018 | 0.002 | 0.0022 | 0.0015 | 0.002 | 0.002 |
| RE (a mixed rare earth element of La, Ce and Nd) | - | 0.03 | - | 0.06 | - | 0.02 | - | - | - | 0.05 | - |
| Nb | 0.025 | 0.015 | 0.02 | 0.01 | 0.015 | 0.025 | 0.02 | 0.015 | 0.01 | 0.02 | 0.016 |
| V | 0.06 | 0.04 | - | - | - | 0.08 | - | 0.06 | - | - | - |
| Ti | 0.015 | 0.035 | 0.025 | 0.01 | 0.02 | 0.025 | 0.025 | 0.03 | 0.025 | 0.02 | 0.015 |
| Carbon equivalent Ceq | 0.43 | 0.53 | 0.42 | 0.53 | 0.43 | 0.54 | 0.46 | 0.57 | 0.49 | 0.47 | 0.73 |

| | | | | | | | | | | | |
|---|---|---|---|---|---|---|---|---|---|---|---|
| Notes: Carbon equivalent Ceq=C+Mn/6+(Cr+Mo+V)/5+(Cu+Ni)/15 | | | | | | | | | | | |

**Table 2: Main process parameters in Example 1-5 and Comparative Example 1**

| | slab heating temperature, °C | holding time, h | start rolling temperature, °C | final rolling temperature, °C | reduction rate of finish rolling, % | stop cooling temperature, °C | tempering temperature, °C | thickness of the clad-layer steel plate, mm | thickness of the base-layer steel plate, mm |
|---|---|---|---|---|---|---|---|---|---|
| Example 1 | 1200 | 2.5 | 1000 | 910 | 75 | 200 | 150 | 10 | 10 |
| Example 2 | 1250 | 2.5 | 1120 | 950 | 65 | 100 | 260 | 15 | 10 |
| Example 3 | 1150 | 3 | 990 | 900 | 80 | 150 | 210 | 8 | 12 |
| Example 4 | 1110 | 2 | 1030 | 890 | 85 | 210 | 230 | 9 | 12 |
| Example 5 | 1165 | 3 | 1105 | 880 | 73 | 180 | 260 | 5 | 15 |
| Comparative Example 1 | 1165 | 3 | 1100 | 910 | 55 | 200 | 280 | - | 25 |

### Mechanical performance test

The mechanical performance testing was conducted on the clad layer and the base layer of the steel plate for the box body of a large mining dump truck in an extremely cold zone of Example 1-5, as well as on the steel plate of Comparative Example 1. Among them, the hardness HBW was determined according to the "Brinell Hardness Test for Metallic Materials Part 1 GB/T 231.1-2018", and the Charpy V type longitudinal impact energy at -60°C was determined according to the "GB/T 12778-2008 Determination method and detection standard of Charpy impact fracture for metallic materials", and the results are shown in Table 3.

**Table 3: Mechanical properties of Example 1-5 and Comparative Example 1**

| | | Hardness HBW | Charpy V-type longitudinal impact energy at -60°C, J |
|---|---|---|---|
| Example 1 | clad layer | 453 | 31 |
| | base layer | 338 | 135 |
| Example 2 | clad layer | 479 | 27 |
| | base layer | 355 | 129 |
| Example 3 | clad layer | 502 | 23 |
| | base layer | 372 | 121 |
| Example 4 | clad layer | 523 | 15 |
| | base layer | 388 | 118 |
| Example 5 | clad layer | 531 | 12 |
| | base layer | 401 | 106 |
| Comparative Example 1 | single layer | 556 | 8 |

| | | | |
|---|---|---|---|
| Note: the impact energy value in Table 3 is the impact energy value that is proportionally reduced to a 10mm standard sample. | | | |

The above results show that in the examples of the present disclosure, in particular in Example 1~5 produced according to the specific production process, the clad-layer steel plate part has a high strength hardness, and the base-layer steel plate part has excellent low-temperature toughness properties while having a high strength hardness. Therefore, in the steel plate for the box body of a large mining dump truck in an extremely cold zone formed by metallurgical bond of the above-mentioned clad layer and base layer, the toughness of the base layer part can be transmitted to the steel plate as a whole through metallurgical bond, so as to ensure that the steel plate as a whole is not easy to break, and the high hardness of the clad layer part is reduced to avoid the damage caused by minerals.

To sum up, the steel plate for the box body of a large mining dump truck in an extremely cold zone with excellent strength hardness, toughness, welding performance, and machining performance involved in the present disclosure was obtained by controlling the chemical composition of the clad-layer steel plate and the base-layer steel plate, the rolling bonding process and the heat treatment process, and is suitable for the products, such as the steel plate for the box body of a large mining dump truck in an extremely cold zone.

## Claims

1. A steel plate for the box body of a large mining dump truck in an extremely cold zone, wherein the steel plate is divided into two layers, a clad-layer steel plate and a base-layer steel plate, and the clad-layer steel plate and the base-layer steel plate are metallurgically bonded, wherein the chemical composition of the clad-layer steel plate is: C: 0.19-0.29wt.%; Si: 0.15-0.75wt.%; Mn: 0.55-1.55wt.%; Cr: 0.10-0.70wt.%; P: ≤0.030wt.%; S: ≤0.010wt.%; Al: 0.010-0.060wt.%; B: 0.0005-0.0050wt.%; and one or more of Mo: 0.01-0.60 wt.%, RE: 0.01-0.08 wt.%, Nb: 0.005-0.060 wt.%, V: 0.01-0.10 wt.%, and Ti: 0.005-0.060 wt.%, with a balance of Fe and unavoidable impurities; the chemical composition of the base-layer steel plate is: C: 0.08-0.13wt.%; Si: 0.15-0.55wt.%; Mn: 0.70-1.70wt.%; Cr: 0.05-0.55wt.%; Mo: 0.10-0.55wt.%; Ni: 1.25-2.55wt.%; P: ≤0.030wt.%; S: ≤0.010wt.%; Al: 0.010-0.080wt.%; B: 0.0005-0.0050wt.%; and one or more of RE: 0.01-0.08wt.%, Nb: 0.005-0.060wt.%, V: 0.01-0.10wt.%, and Ti: 0.005-0.060wt.%, with a balance of Fe and unavoidable impurities.

2. The steel plate for the box body of a large mining dump truck in an extremely cold zone, wherein the steel plate is divided into two layers, a clad-layer steel plate and a base-layer steel plate, and the clad-layer steel plate and the base-layer steel plate are metallurgically bonded, wherein the clad-layer steel plate further comprises C: 0.19-0.29wt.%; Si: 0.15-0.75wt.%; Mn: 0.55-1.55wt.%; Cr:0.10-0.70wt.%; P: ≤0.030wt.%; S: ≤0.010wt.%; Al: 0.010-0.060wt.%; B: 0.0005-0.0050wt.%; and one or more of Mo: 0.01-0.60 wt.%, RE: 0.01-0.08 wt.%, Nb: 0.005-0.060 wt.%, V: 0.01-0.10 wt.%, and Ti: 0.005-0.060 wt.%, in addition to Fe and unavoidable impurities;
the base-layer steel plate further comprises C: 0.08-0.13wt.%; Si: 0.15-0.55wt.%; Mn: 0.70-1.70wt.%; Cr: 0.05-0.55wt.%; Mo: 0.10-0.55wt.%; Ni: 1.25-2.55wt.%; P: ≤0.030wt.%; S:
≤0.010wt.%; Al: 0.010-0.080wt.%; B: 0.0005-0.0050wt.%; and one or more of RE: 0.01-0.08wt.%, Nb: 0.005-0.060wt.%, V: 0.01-0.10wt.%, and Ti: 0.005-0.060wt.%, in addition to Fe and unavoidable impurities.

3. The steel plate for the box body of a large mining dump truck in an extremely cold zone according to claim 1 or 2, wherein the clad-layer steel plate comprises: Mo: ≤0.20wt.%; RE: ≤0.05wt.%; Nb:
0.010-0.030wt.%; V≤0.06wt.%; and Ti: 0.010-0.030wt.%;
the base-layer steel plate comprises: RE: ≤0.06wt.%; Nb: 0.010-0.030wt.%; V: ≤0.08wt.%; and Ti: 0.01-0.035wt.%.

4. The steel plate for the box body of a large mining dump truck in an extremely cold zone according to claim 1 or 2, wherein the carbon equivalent Ceq of the clad-layer steel plate is 0.40~0.50; the carbon equivalent Ceq of the base layer is 0.45~0.60; wherein, the carbon equivalent Ceq = C + Mn/6 + (Cr + Mo + V)/5 + (Cu + Ni)/15.

5. The steel plate for the box body of a large mining dump truck in an extremely cold zone according to any one of claims 1-4, wherein the clad-layer steel plate and the base-layer steel plate are bonded metallurgically by a rolling process.

6. The steel plate for the box body of a large mining dump truck in an extremely cold zone according to any one of claims 1-4, wherein the mechanical properties of the clad-layer steel plate of the steel plate for the box body of a large mining dump truck in an extremely cold zone are as follows: a Brinell hardness of not less than 450HBW, a Charpy V-type longitudinal impact energy at -60°C of not less than 10J; and the mechanical properties of the base-layer steel plate are as follows: a Brinell hardness of not less than 300HBW, a Charpy V-type longitudinal impact energy at -60°C of not less than 100J.

7. The steel plate for the box body of a large mining dump truck in an extremely cold zone according to any one of claims 1-4, wherein the microstructure of the clad-layer steel plate is martensite and residual austenite, and the microstructure of the base-layer steel plate is martensite and/or bainite and residual austenite.

8. The steel plate for the box body of a large mining dump truck in an extremely cold zone according to any one of claims 1-4, wherein the thickness of the clad-layer steel plate is 5~20mm, and the thickness of the base-layer steel plate is 6~15mm.

9. A manufacturing method of the steel plate for the box body of a large mining dump truck in an extremely cold zone, comprising the following steps:
(1) smelting and casting to form a clad-layer continuous casting billet and a base-layer continuous casting billet;
(2) making the clad-layer continuous casting billet and the base-layer continuous casting billet into a composite billet assembly;
(3) slab heating and slab rolling of the composite billet assembly: in the heating step, the slab heating temperature is 1100-1250 °C, and the slab is held for 1-3 hours; the combined continuous casting slab is rolled, in which the start rolling temperature is 1000~1150 °C, the final rolling temperature is 880~980 °C, and the reduction rate is ≥50%; after rolling, the steel plate is quenched online to a temperature between room temperature and 200 °C.

10. The manufacturing method of claim 9, wherein the process of making a clad-layer continuous casting billet and a base-layer continuous casting billet into a composite billet assembly comprises the following steps:
(i) using a mechanical method to clean the surface oxide layer on the one side to be laminated of the clad-layer continuous casting billet and the base-layer continuous casting billet, and then grooving the four edges of the surface after the surface oxide layer is cleaned;
(ii) placing and laminating the surface cleaned clad-layer continuous casting billet and the base-layer continuous casting billet in a manner that the cleaned surface of the clad-layer continuous casting billet faces the cleaned surface of the base-layer continuous casting billet;
(iii) welding and sealing the laminated surface of the clad-layer continuous casting billet and the base-layer continuous casting billet around the perimeter and leaving a vacuum channel at the edge, through which the composite billet assembly after welding and sealing is vacuumed, and then sealing the composite billet assembly to form a composite billet assembly.

11. The manufacturing method of claim 9 or 10, wherein after rolling, the slab is subjected to a tempering treatment; the tempering temperature is 150~350 °C, the holding time in min is 3× plate thickness, and the unit of plate thickness is mm.

12. The manufacturing method of claim 9 or 10, wherein the clad-layer continuous casting billet has the chemical composition of the clad-layer steel plate of claim 1 or 2, and the base-layer continuous casting billet has the chemical composition of the base-layer steel plate of claim 1 or 2.

13. The manufacturing method of claim 9 or 10, wherein in the rolled steel plate, the mechanical properties of the clad-layer steel plate are as follows: a Brinell hardness of not less than 450HBW, a Charpy V-type longitudinal impact energy at -60°C of not less than 10J; and the mechanical properties of the base-layer steel plate are as follows: a Brinell hardness of not less than 300HBW, a Charpy V-type longitudinal impact energy at -60°C of not less than 100J.

14. The manufacturing method of claim 9 or 10, wherein in the rolled steel plate, the thickness of the clad-layer steel plate is 5~20mm, and the thickness of the base-layer steel plate is 6~15mm.
